# EUROPEAN PATENT APPLICATION

(11) **EP 2 687 947 A1**
(43) Date of publication of application: **22.01.2014**
(21) Application number: 13176383.1
(22) Date of filing: 12.07.2013
(51) Int. Cl.: G06F 3/01

(54) **Display apparatus control system and method and apparatus for controlling a plurality of displays**

(30) Priority: 18.07.2012 KR 20120078305
(71) Applicant: Samsung Electronics Co., Ltd, Gyeonggi-do 443-742 (KR)
(72) Inventor: Leigh, Sang-Won, Gyeonggi-do (KR); Lee, Jun-seok, Seoul (KR); Cho, Sung-goo, Seoul (KR); Yu, Kyung-hwa, Seoul (KR); Chung, Jin-yong, Seoul (KR)
(74) Representative: Brandon, Paul Laurence

(57) **Abstract**

A display apparatus control system and a method and apparatus for controlling a plurality of display apparatuses are provided. The method of controlling a plurality of display apparatuses includes capturing a region at which a user is located, generating a user-captured image, determining which display apparatus the user is looking at from among the plurality of display apparatuses, based on the user-captured image, and determining the determined display apparatus to be a control target display apparatus, and transmitting a control signal which corresponds to a user's command to be the control target display apparatus when the user's command is input.

## Description

### CROSS-REFERENCE TO RELATED APPLICATION

This application claims priority from Korean Patent Application No. 10-2012-0078305, filed on July 18, 2012, in the Korean Intellectual Property Office, the disclosure of which is incorporated herein by reference, in its entirety.

### BACKGROUND

### 1. Field

Apparatuses and methods consistent with the exemplary embodiments relate to a display apparatus control system and a method and apparatus for controlling a plurality of display apparatuses. More particularly, the exemplary embodiments relate to a control apparatus which determines which display apparatus a user is looking at, and controls the determined display apparatus. A method of controlling the same and a display apparatus control system are further disclosed.

### 2. Description of the Related Art

In the related art, when a plurality of display apparatuses (for example, personal computer (PC), television (TV), mobile apparatus, etc.) are used, the user uses separate input apparatuses to control the plurality of display apparatuses. For example, a user uses a remote controller for controlling a TV, a keyboard and mouse for controlling a PC, and a touch screen for controlling a mobile apparatus.

However, when a plurality of display apparatuses are used simultaneously, and thus the respective input apparatuses are used, the user has to change the input apparatus and input a control command every time an input is provided to a display apparatus.

Further, even when a plurality of display apparatuses are controlled by one input apparatus, the user has to newly perform a connection to a display apparatus every time a display apparatus is to be controlled.

Accordingly, there exists a need for a method of easily and conveniently controlling a plurality of display apparatuses using one input apparatus.

### SUMMARY

One or more exemplary embodiments may overcome the above disadvantages, and other disadvantages which are not described above. However, it is understood that one or more exemplary embodiment are not required to overcome the disadvantages described above, and may not overcome any of the problems described above.

One or more exemplary embodiments are to provide a control apparatus which determines and controls a display apparatus which a user is looking at, as a control target display apparatus, to easily and conveniently control a plurality of display apparatuses using one input apparatus, A display control apparatus and a method of controlling the same are also disclosed.

According to an aspect of an exemplary embodiment, there is provided a method of controlling a display control apparatus which is connected to a plurality of display apparatuses. The method may include: capturing a region, at which a user is located, to generate a user-captured image; determining which display apparatus the user is looking at from among the plurality of display apparatuses, based on the user-captured image, and determining the determined display control apparatus to be a control target display apparatus; and transmitting a control signal which corresponds to a user's command to the control target display apparatus in response to a user's command input.

The control apparatus may include an input which is configured to receive a user's command. The determining may include determining which display apparatus the user is looking at, to be the control target display apparatus when a preset key of the input is selected.

Further, the determining may further include determining whether or not a preset motion is input based on the user-captured image; and determining which display apparatus the user is looking at, to be the control target display apparatus, when the preset motion is input.

The preset motion may be a motion in which the user covers his/her eyes plural times.

Alternatively, the preset motion may be a motion in which the user is looking at the display apparatus for longer than a preset time.

The determining may include determining a first display apparatus to be the control target display apparatus even when a second display apparatus is determined to be the control target display apparatus, in response to a preset job being performed using the first display apparatus.

The preset job may be a word processing function.

The determining may include tracing a motion of the user's eyeballs or tracing a motion of a direction of a user's face in order to determine which display apparatus the user is looking at, from among the plurality of display apparatuses.

According to another aspect of an exemplary embodiment, a control apparatus is connected to a plurality of display apparatuses for controlling the display apparatuses. The control apparatus may include: a capturing device which is configured to capture a region at which a user is located, in order to generate a user-captured image; a communicator which is configured to communicate with the plurality of display apparatuses; and a controller which is configured to determine which display apparatus the user is looking at from among the plurality of display apparatuses, based on the user-captured image, the controller determines the determined display apparatus to be a control target display apparatus, and the control unit controls the communicator to transmit a control signal which corresponds to a user's command to the control target display apparatus, when the user's command is input.

The control apparatus may further include an input which is configured to receive the user's command. The controller may determine display apparatus which the user is looking at, to be the control target display apparatus, when a preset key of the input unit is selected.

Alternatively, the control unit may determine whether or not a preset motion is input based on the user-captured image and may determine the display apparatus which the user is looking at to be the control target display apparatus, when the preset motion is input.

The preset motion may be a motion in which the user covers his/her eyes plural times.

Alternatively, the preset motion may be a motion in which the user is looking at the display apparatus for longer than a preset time.

The controller may determine a first display apparatus to be the control target display apparatus even when a second display apparatus is determined as the control target display apparatus, in response to a preset job being performed using the first display apparatus.

The preset job may be a word processing function.

The controller may trace a motion of user's eyeballs or a direction of a user's face in order to determine which display apparatus the user is looking at.

According to another aspect of an exemplary embodiment, there is provided a control system for a display apparatus. The display apparatus control system may include: a plurality of display apparatuses configured to operate according to a control signal transmitted from a control apparatus; and the control apparatus may be configured to capture a region, at which a user is located, in order to generate a user-captured image, determine a display apparatus which the user is looking at from among the plurality of display apparatuses, based on the user-captured image, and may transmit a control signal which corresponds to a user's command to the control target display apparatus, when the user's command is input.

Additional aspects and advantages of the exemplary embodiments will be set forth in the detailed description, will be obvious from the detailed description, or may be learned by practicing the exemplary embodiments.

### BRIEF DESCRIPTION OF THE DRAWING FIGURES

The above and/or other aspects will be more apparent by describing in detail exemplary embodiments, with reference to the accompanying drawings, in which:

FIG. 1 is a view illustrating a control system for a display apparatus, according to an exemplary embodiment;

FIG. 2 is a view which schematically illustrates a configuration of a control apparatus according to an exemplary embodiment;

FIGS. 3A to 3C are views which illustrate a method of determining which display apparatus a user is looking at, according to an exemplary embodiment;

FIGS. 4 and 5 are flowcharts illustrating methods of controlling a display apparatus according to exemplary embodiments; and

FIGS. 6A to 7C are views illustrating method of determining which display apparatus a user is looking at, according to exemplary embodiments.

### DETAILED DESCRIPTION OF THE EXEMPLARY EMBODIMENTS

Hereinafter, exemplary embodiments will be described in more detail with reference to the accompanying drawings.

In the following description, the same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

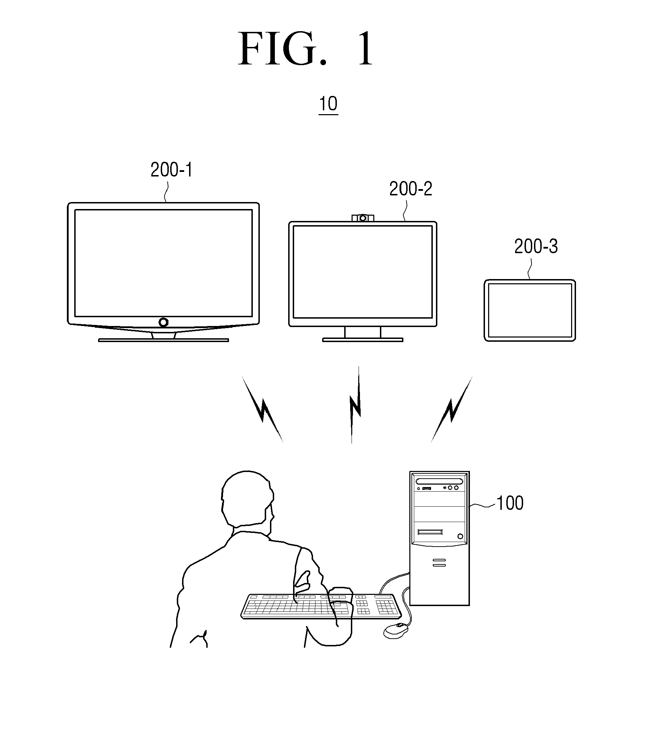

FIG. 1 is a view illustrating a display apparatus control system according to an exemplary embodiment. Referring to FIG. 1, a display apparatus control system 10 includes a control apparatus 100 and a plurality of display apparatuses 200-1, 200-2, and 200-3 which are commonly referred to as a display apparatus 200. The plurality of display apparatuses 200-1 to 200-3 may be a TV, a desktop PC, or a tablet PC as shown in FIG. 1. However, the display apparatuses are merely illustrative in nature and may be implemented with various apparatus such as a smart phone, a laptop PC, etc.

The control apparatus 100 is connected to a plurality of display apparatuses 200-1 to 200-3 and controls one of the plurality of display apparatuses 200-1 to 200-3. The control apparatus 100 may be connected to the plurality of display apparatuses 200-1 to 200-3 in a wireless manner. However, this is merely illustrative, and the control apparatus 100 may be connected to the plurality of display apparatuses 200-1 to 200-3 in a wired manner.

Specifically, the control apparatus 100 captures a region at which the user is located, and generates a user-captured image.

The control apparatus 100 determines which display apparatus at which the user is looking, among the plurality of display apparatuses 200-1 to 200-3, based on the user-captured image. The control apparatus 100 may trace a direction of movement of a user's face or a motion of a user's eyeballs to determine which display apparatus the user is looking at.

In particular, the control apparatus 100 may determine the display apparatus, which the user is looking at, after a user inputs a command for changing the control target display apparatus. The user's command for changing the control target display apparatus may be a command of selecting a preset key of the input unit which is configured to receive the user's command or a preset motion of the user (for example, covering of eyes plural times).

The control apparatus 100 then determines the display apparatus, atwhich the user is looking, to be the control target display apparatus. However, when an existing display apparatus is performing a preset job (for example, a word processing job and the like), the control apparatus may determine the existing display apparatus to be the control target display apparatus, regardless of which display apparatus the user is looking at.

When the control target display apparatus is determined and the user then inputs a command, the control apparatus 100 may transmit a control signal to the control target display apparatus which corresponds to the user command.

The display apparatus which the user is looking at, from among the plurality of display apparatuses 200-1 to 200-3, receives the control signal from the control apparatus 100 and then performs an operation according to the received control signal.

The user can more conveniently control the plurality of display apparatuses using one input apparatus according the above-described display apparatus control system 10.

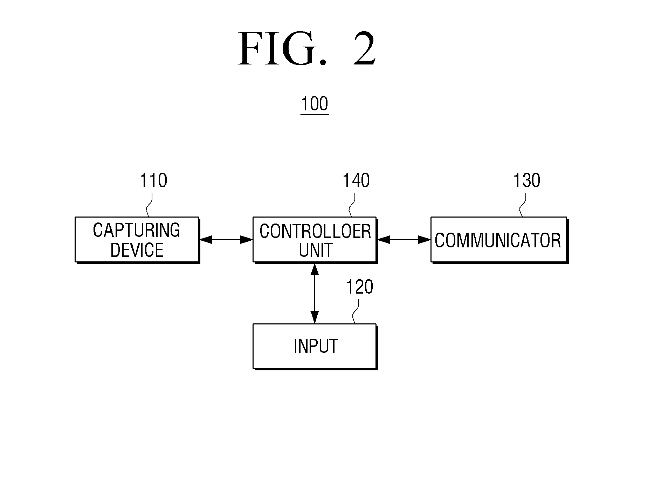

The control apparatus 100, according to an exemplary embodiment, will be described in more detail with reference to FIG. 2. FIG. 2 is a block diagram illustrating a configuration of the control apparatus 100. Referring to FIG. 2, the control apparatus 100 includes a capturing device 110, an input 120, a communicator 130, and a controller 140.

The capturing device 110 captures an image of a region at which the user is located, and generates a user-captured image. In particular, the capturing device 110 may be disposed on a top of one of the plurality of display apparatuses 200-1 to 200-3 in order to generate the user-captured image. However, this is merely illustrative and a capturing device may be at any location which will capture a region where the user is located, may be applied to the inventive concept.

Further, the capturing device 110 may be implemented with a plurality of imaging apparatuses, and the user-captured image may be acquired using one of the plurality of imaging apparatuses.

The input 120 receives a user command for controlling the display apparatus 200. In particular, the input 120 may be implemented with an input apparatus such as a remote controller, a keyboard, a mouse, a pointing device or a touch screen, etc.

Alternatively, the input 120 may include a preset key or button which is configured to receive a change command for the control target display apparatus.

The communicator 130 performs communication with the plurality of external apparatuses 200-1 to 200-3 in a wireless or wired manner. In particular, the communicator 130 may transmit a control signal to the display apparatus which the user is looking at which corresponds to a user's command.

The communication unit 130 according to an exemplary embodiment may be implemented with an infrared (IR) communication module, a Bluetooth® module, a Wi-Fi® module, or the like. However, this is merely illustrative and the communicator 130 may communicate with an external display apparatus using other communication modules.

The controller 140 controls an overall operation of the control apparatus 100 according to a user's command. In particular, the controller 140 determines which display apparatus the user is looking at from among the plurality of display apparatuses, based on the user's captured image which was captured by the capturing device 110 and determines the determined display apparatus to be the control target display apparatus. When a user's command is input, the controller 140 controls the communicator 130 to transmit the control signal corresponding to the user's command to the control target display apparatus.

Specifically, controller 140 determines which display apparatus the user is looking at from among the plurality of display apparatuses, based on the user-captured image which was captured by the capturing device 110. The controller 140 may determine which display apparatus the user is looking at by tracing a direction of movement of the user's face, based on the user-captured image.

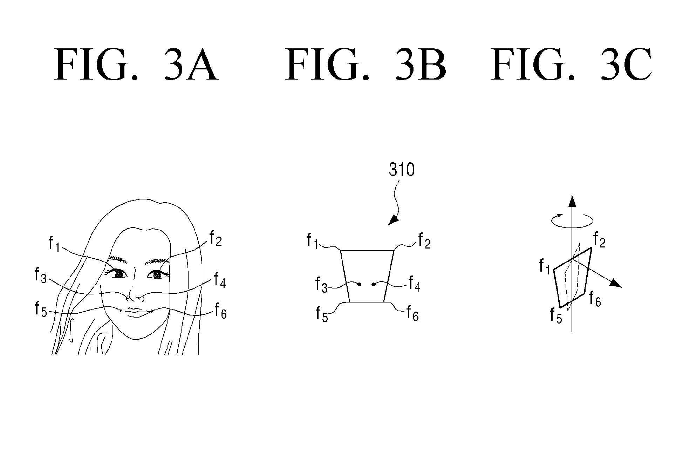

The method of determining which display apparatus the user is looking at, by tracing the direction of movement of the user's face will be described with reference to FIGS. 3A to 3C. First, the controller 140 detects the user's face in the user-captured image which was captured by the capturing device 110. The controller 140 detects a plurality of feature points f1 to f6 in the user's face, as shown in FIG. 3A. The controller 140 generates a virtual figure 310 using the detected feature points (f1 to f6), as shown in FIG. 3B. The controller 140 determines whether or not the virtual figure 310 is changed in order to determine whether or not the user's face has rotated as shown in FIG. 3C. The controller 140 detects a direction which the user is looking at, according to the determined rotation of the user' face, and compares location information of the plurality of display apparatuses which has been prestored with the direction, which the user is looking at in order to determine which display apparatus the user is looking at.

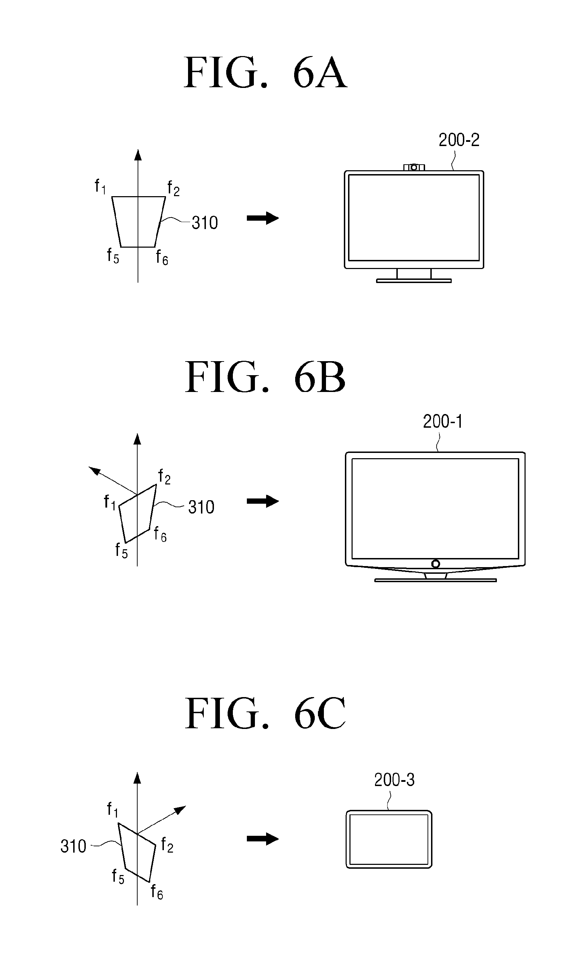

For example, as shown in FIG. 1, when the display apparatus (that is, monitor) 200-2 including the capturing device 110 which captures the user's face, is disposed in the center, the display apparatus (that is, smart TV) 200-1 is disposed on the left of the display apparatus 200-2, and the display apparatus (that is, tablet PC) 200-3 is disposed on the right of the display apparatus 200-2, a storage device (not shown) has stored the locations of the smart TV200-1, monitor 200-2, and tablet PC 200-3. In response to a determination that the virtual ffigure 310 described in FIGS. 3A to 3C is not rotated as shown in FIG. 6A, the controller 140 determines that the user is looking at the monitor 200-2 disposed in the center. In response to a determination that the virtual figure 310 is rotated to the left as shown in FIG. 6B, the controller 140 may determine that the user is looking at the smart TV 200-1 which is disposed on the left. Alternatively, when a determination is made that the virtual figure 310 is rotated in the right as shown in FIG. 6C, the controller 140 may determine that the user is looking at the tablet PC which is disposed on the right.

Alternatively, the controller 140 may trace a motion of the user's eyeballs through the user-captured image which is captured by the capturing device 110 in order to determine which display apparatus the user is looking at. Specifically, the controller 140 discriminates an eyeball image from the user-captured image through face modeling technology. The face modeling technology is an analysis process which processes the face image acquired by the capturing device 110 and converting the processed face image into digital information, for transmission. One of the active shape modeling (ASM) method and the active appearance modeling (AAM) method may be used as the face modeling technology. The ASM method is a modeling method for, first, detecting a location of eyes in a part of a face, determining locations using shape information of other parts of a face (for example, nose, mouse, eyebrows, and the like) according to a generic model based on the detected location of an eye, and detecting feature points of the face. The AAM method is a modeling method which detects feature points capable of effectively explaining a face feature by considering both shape information and further texture information.

Further, the controller 140 may determine a motion of a user's eyeballs by using the discriminated eyeball image. Then, the controller 140 may detect a direction which the user is looking at, by using the motion of the eyeballs, and by comparing the location information, which has already been stored with the direction, at which the user is looking, to determine which display apparatus the user is looking at.

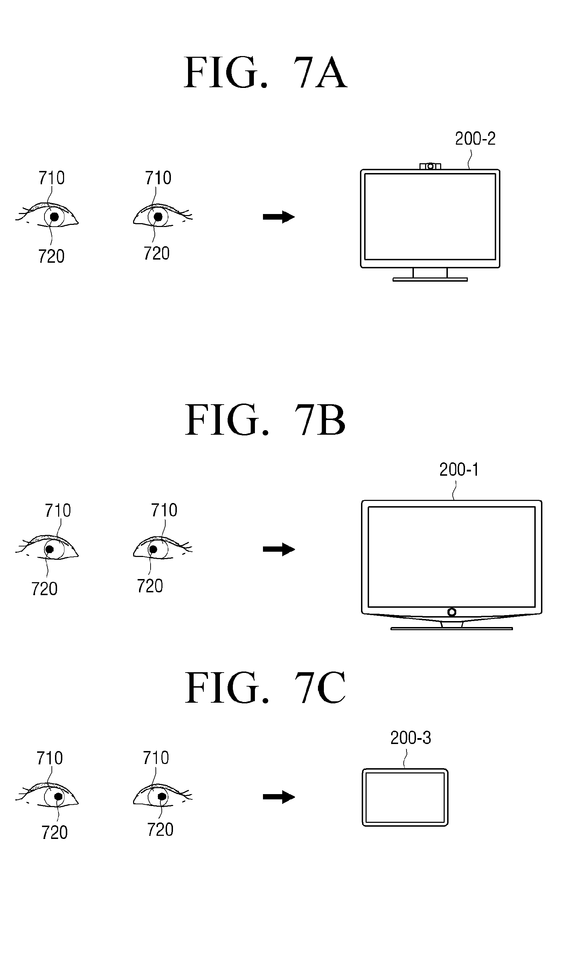

For example, as show in FIG. 1, when the monitor 200-2, including the capturing device 110, configured to capture the user's face is disposed in the center, the smart TV 200-1 is disposed on the left of the monitor 200-2, and the tablet PC 200-3 is disposed on the right of the monitor 200-2, the storage device (not shown) has stored location information of the smart TV 200-1, monitor 200-2 and tablet PC 200-3. As shown in FIG. 7A, in response to a determination that a captured user's pupil 720 is disposed in the center, based on image information of the user's iris 710 and pupil 720, which has been already stored, the controller 140 may determine that the user is looking at the monitor 200-2, which is disposed in the center. As shown in FIG. 7B, in response to a determination that the location of the user's pupil 720 is shifted from the center to the left, the controller 140 may determine that the user is looking at the smart TV 200-1 which is disposed on the left. Further, in response to a determination that the location of the user's pupil 720 is shifted from the center to the right as shown in FIG. 7C, the controller 140 may determine that the user is looking at the tablet PC which is disposed on the right.

Although one capturing device 110 configured to capture the user's face or eyeballs is illustrated in the exemplary embodiment described in FIGS. 6A to 7C, this is is merely one embodiment and the capturing device 110 may be included in each of the plurality of display apparatuses 200-1 to 200-3. In this situation, the controller 140 may determine that a display apparatus including a capturing device which acquires an image which the user is looking at, from among images acquired in the capturing devices of the plurality of display apparatuses 200-1 to 200-3, as the display apparatus which the user is looking at.

The method of determining which display apparatus the user is looking at, by tracing the direction of movement of the user's face or the motion of the user's eyeballs is merelyillustrative, and the controller 140 may determine which display apparatus the user is looking at, by using other methods. For example, when an IR emitter is included in each of the display apparatuses and the user wears glasses which include IR reception units, the controller 140 may receive an IR signal emitted from the display apparatus in the direction, which the user is looking at, in order to determine which display apparatus the user is looking at.

The controller 140 may determine which display apparatus the user is looking at, only when a user's command is input to change the control target display apparatus. Specifically, the controller 140 may determine which display apparatus the user is looking at, after selection of the preset key or button included in the input unit 120. Alternatively, the controller 140 may determine which display apparatus the user is looking at, through the user-captured image which is captured through the capturing device 110 after the preset motion is input. The preset motion may be a motion in which the user covers his/her eyes plural times, but this is merely illustrative. The preset motion may be the user's smiling expression or motion of the user nodding his/her head plural times.

Then, controller 140 determines which display apparatus the user is looking at, to be the control target display apparatus. The control target display apparatus is a display apparatus controlled by the user's input command which is input through the input 120 of the control apparatus 100, from among the plurality of display apparatuses 200-1 to 200-3.

However, when a preset job is being performed using a first display apparatus, the controller 140 maintains the existing first display apparatus as the control target display apparatus, even when the display apparatus which the user is looking at, is changed to a second display apparatus. That is, when the user performs a word processing function such as a text draft or input of a text message, the display apparatus which the user is looking at, is different from a display apparatus to be controlled by the user. Therefore, when the user performs the preset job, the controller 140 may continuously maintain the existing display apparatus which is performing the preset job as the control target display apparatus, regardless of the direction in which the user is looking.

When a user's command is input through the input 20, the controller 140 controls the communicator 130 to transmit a control signal which corresponds to the user's command to the control target display apparatus. However, it is merely illustrative that the controller 140 transmits the control signal which corresponds to the user's command to the control target display apparatus, and the controller 140 may key information or button information which is selected by the input.

As described above, the control apparatus determines which display apparatus the user is looking at, as the control target display apparatus, so that the user can more conveniently control the plurality of display apparatuses using one input apparatus.

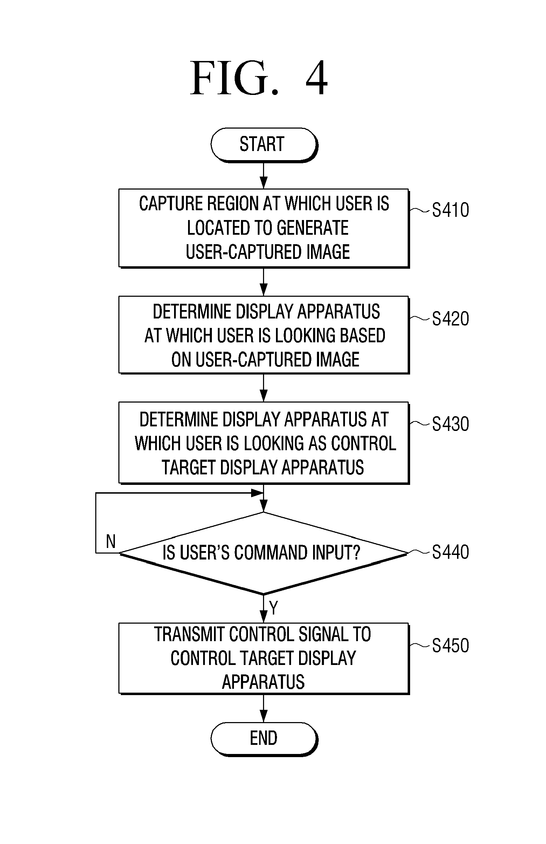

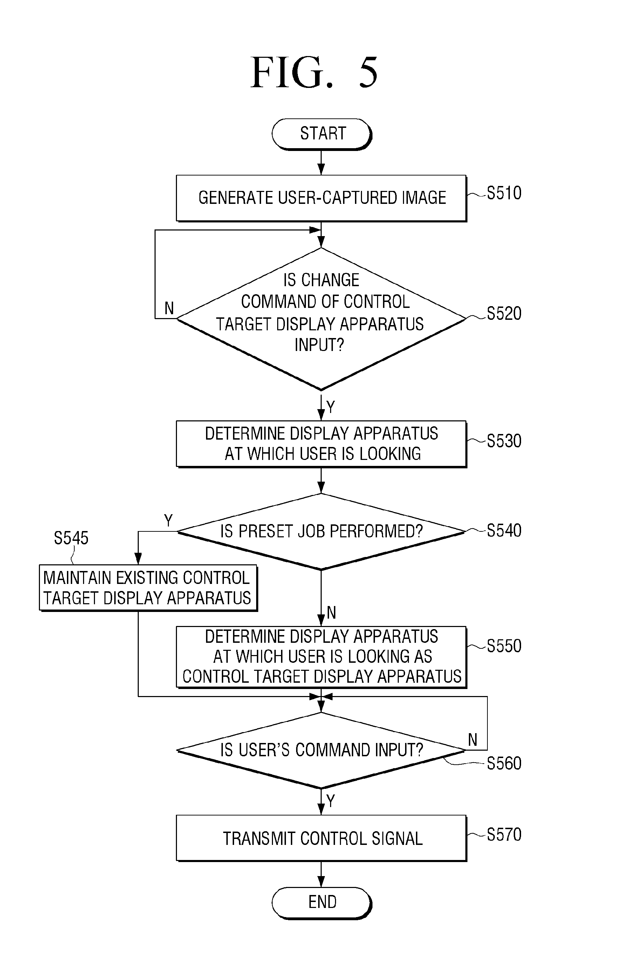

Hereinafter, a method of controlling a display apparatus with reference to FIGS. 4 and 5 will be described. FIG. 4 is a flowchart which schematically explains a method of controlling a display apparatus, according to an exemplary embodiment.

First, the control apparatus 100 captures a region at which the user is located, in order to generate a user-captured image (S410).

The control apparatus 100 determines which display apparatus the user is looking at, based on the user-captured image (S420). The control apparatus 100 may determine which display apparatus the user is looking at, by tracing a direction of movement of a user's face or a motion of a user's eyeballs.

The control apparatus 100 determines the display apparatus which the user is looking at to be the control target display apparatus (S430).

The control apparatus 100 determines whether or not a user's command which controls the control target display apparatus is input (S440). At this time, the control target display apparatus is a display apparatus which is controlled by the user's command input through the input 120 of the control apparatus 100, from among the plurality of display apparatuses 200-1 to 200-3.

In response to a determination that the user's command is input (S440-Y), the control apparatus 100 transmits a control signal which corresponds to the user's command, to the control target display apparatus (S450).

FIG. 5 is a view which explains in detail a method of controlling a display apparatus through the control apparatus 100, according to an exemplary embodiment.

The control apparatus 100 generates a user-captured image (S510). Specifically, the control apparatus 100 may capture a regionat which the user is located, by using the capturing device 110 and generating the user-captured image through the captured image.

The control apparatus 100 determines whether or not a command is input for changing the control target display apparatus (S520). The change command of the control target display apparatus is a command which selects a preset key included in the input 120 (for example, key board). The change command of the control target display apparatus may be a preset motion of the user input through the capturing device 110 (for example, a motion in which the user covers the motion of his/her eyes or a motion in which the user is looking for longer than a preset period of time). In another exemplary embodiment, the change command of the control target display apparatus may be a voice command (for example, user's voice uttering a command such as "change"), or the change command may be a gesture command (for example, moving a user's hands from left to right).

When the change command of the control target display apparatus is input (S520-Y), the control apparatus 100 determines which display apparatus the user is looking at (S530). Specifically, the control apparatus 100 may trace a direction of movement of a user's face or may trace a motion of a user's eyeballs in order to determine which display apparatu the user is looking at, from among the plurality of display apparatuses.

The control apparatus 100 determines whether or not a preset job is being performed through an existing control target display apparatus (S540). Thepreset job may be a word processing function such as a text draft or text message draft.

When a determination is made that the preset job is performed through the existing control target display apparatus (S540-Y), the control apparatus 100 maintains the existing control target display apparatus as the control target display apparatus (S545).

In response to a determination that the preset job is not performed through the existing control target display apparatus (S540-N), the control apparatus 100 determines which display apparatus the user is looking at, to be the control target display apparatus (S550).

When the control target display apparatus is determined, the control apparatus 100 determines whether or not a user's command which controls the control target display apparatus, is input (S560).

When the user's command is input, the control apparatus 100 transmits a control signal to the control target display apparatus (S570). The control target display apparatus may perform an operation which corresponds to the user's command based on the control signal which was transmitted from the control apparatus 100.

By the various exemplary embodiments described above, the control apparatus 100 controls the display apparatus which the user is looking at so that the display apparatus 100 can more conveniently and intuitively control the display apparatus.

The exemplary embodiments have described a control apparatus which controls the display apparatus, corresponding to a direction in which the user is looking, but this is merely illustrative. The inventive concept may be applied even when a plurality of windows are displayed in one display apparatus. For example, when a window for a word processing job and a window for a message are displayed, the controller 140 detects a windowwhich the user is looking at, and performs text input in the window which the user is looking at, when the user inputs text using a keyboard. That is, the window which the user is looking at, is a window in which a word processing job is performed, the controller 140 may perform a text input command in the window, in which the word processing function is performed, according to the user's text input.

A program code for executing control methods according to the various exemplary embodiments described above may be stored in a non-transitory computer-readable medium. The non-transitory computer-recordable medium is not a medium in which data is temporarily stored for a short period of time such as in a register, cache, or a memory, but rather in a medium in which data is semi-permanently stored and is readable by an apparatus. Specifically, the various applications or programs described above may be stored in the non-transitory computer-readable medium such as a compact disc (CD), a digital versatile disc (DVD), a hard disc, a Blu-ray Disc® , a universal serial bus (USB), a memory card, or a read only memory (ROM).

The foregoing exemplary embodiments and advantages are merely exemplary and are not to be construed as limiting the inventive concept. The exemplary embodiments can be readily applied to other types of devices. Also, the description of the exemplary embodiments is intended to be illustrative, and not to limit the scope of the claims, and many alternatives, modifications, and variations will be apparent to those skilled in the art.

## Claims

1. A method of controlling a control apparatus connected to a plurality of display apparatuses, the method comprising:
capturing a region, at which a user is located, to generate a user-captured image;
determining a display apparatus, at which the user is looking, from among the plurality of display apparatuses based on the user-captured image and determining the determined display apparatus to be a control target display apparatus; and
transmitting a control signal corresponding to a user's command to the control target display apparatus when the user's command is input.

2. The method as claimed in claim 1, wherein the apparatus includes an input unit configured to receive the user's command,
wherein the determining includes determining the display apparatus which the user is looking at, to be the control target display apparatus when a preset key of the input unit is selected.

3. The method as claimed in claim 1, wherein the determining further includes:
determining whether or not a preset motion is input based on the user-captured image; and
determining the display apparatus which the user is looking at to be the control target display apparatus when the preset motion is input.

4. The method as claimed in claim 3, wherein the preset motion is a motion in which the user covers his/her eyes plural times.

5. The method as claimed in claim 3, wherein the preset motion is a motion in which the user is looking at the display apparatus for longer than a preset time.

6. The method as claimed in any one of claims 1 to 5, wherein the determining includes determining a first display apparatus to be the control target display apparatus even when a second display apparatus is determined as the control target display apparatus if a preset job is performed using the first display apparatus.

7. The method as claimed in claim 6, wherein the preset job is a word processing job.

8. The method as claimed in any one of claims 1 to 7, wherein the determining includes tracing a motion of the eyeballs of the user or a direction of a user's face in order to determine the display apparatus, at which the user is looking, from among the plurality of display apparatuses.

9. A control apparatus connected to a plurality of display apparatuses, the control apparatus comprising:
a capturing unit configured to capture a region, at which a user is located, in order to generate a user-captured image;
a communication unit configured to perform communication with the plurality of display apparatuses; and
a control unit configured to determine which display apparatus the user is looking at, from among the plurality of display apparatuses based on the user-captured image, determine the determined display apparatus to be a control target display apparatus, and control the communication unit to transmit a control signal corresponding to a user's command to the control target display apparatus, when the user's command is input.

10. The control apparatus as claimed in claim 9, further comprising an input unit configured to receive the user's command,
wherein the control unit determines the display apparatus, at which the user is looking, as the control target display apparatus when a preset key of the input unit is selected.

11. The control apparatus as claimed in claim 9, wherein the control unit determines whether or not a preset motion is input based on the user-captured image and determines the display apparatus which the user is looking at, as the control target display apparatus, when the preset motion is input.

12. The control apparatus as claimed in claim 11, wherein the preset motion is a motion in which the user covers his/her eyes plural times.

13. The control apparatus as claimed in claim 11, wherein the preset motion is a motion in which the user is looking at the display apparatus for longer than a preset time.

14. The control apparatus as claimed in any one of claims 9 to 13, wherein the control unit determines a first display apparatus to be the control target display apparatus even when a second display apparatus is determined as the control target display apparatus if a preset job is performed using the first display apparatus,
wherein the preset job is a word processing job.

15. The control apparatus as claimed in claim 14, wherein the control unit traces a motion of a user's eyeballs or a direction of a user's face in order to determine which display apparatus the user is looking at.
